# EUROPEAN PATENT APPLICATION

(11) **EP 4 428 026 A1**
(43) Date of publication of application: **11.09.2024**
(21) Application number: 23382228.7
(22) Date of filing: 10.03.2023
(51) Int. Cl.: B63B 1/10, F03D 13/25, F03D 13/40

(54) **FLOATING CONCRETE STRUCTURE FOR OFFSHORE WIND APPLICATIONS AND METHOD OF MANUFACTURE OF SUCH A FLOATING STRUCTURE**

(71) Applicant: Ferrovial Construcción, S.A., 28042 Madrid (ES)
(72) Inventor: Sáenz de Ormijana, Fidel, Madrid (ES); Bajo, Carlos J., Madrid (ES); Paulotto, Carlo, Madrid (ES); Enamorado, César A., Madrid (ES); León, Adolfo, Madrid (ES)
(74) Representative: Elzaburu S.L.P.

(57) **Abstract**

The present invention relates to a floating concrete structure for offshore wind applications, comprising a semi-submersible platform which in turn comprises:
- an inner column (1),
- a plurality of outer columns (2) distributed around the inner column (1) equidistant thereto (1), wherein the inner column (1) or one of the outer columns (2) supports a wind turbine tower,
- a plurality of beams (4) connecting each outer column (2) with the inner column (1).

The floating structure further comprises a pontoon (3), the inner column (1) and the plurality of outer columns (2) being supported on the pontoon (3) and the plurality of beams (4) comprises first beams (4.1) which extend parallel to the pontoon (3) between the upper end of the inner column (1) to a point of attachment with the outer columns (2).

## Description

### Technical field

The present invention belongs to the construction and naval technology sector. Specifically, the invention relates to marine structures in the open sea, also called offshore structures, and particularly to semi-submersible offshore floating structures, the purpose of which is to support the development of industrial and/or energy activities.

### Background of the invention

Offshore wind technology has been identified as one of the technologies that should lead the decarbonisation of the European energy mix in the coming decades. The European Commission estimates that, to meet the objectives of the fight against climate change, an installed capacity of between 240 and 450 GW of offshore wind energy is required by 2050. It is expected that, by then, electricity will represent at least 50% of the total energy mix, with 30% of the demand being supplied by offshore wind energy.

Technologies based on fixed foundations make up practically all of the commercial offshore parks built in the world until the year 2022. However, according to WindEurope in its report "Floating Offshore Wind Vision Statement - June 2017", 80% of the offshore wind resource in Europe is found at depths greater than 60 metres, and therefore unfeasible for fixed structures.

The design of floating structures for offshore environments is linked to the technological race that the oil industry (Oil & Gas or O&G) has experimented in the last 60 years, and its effort to profitably exploit oil and gas fields that are increasingly far from the coast and deeper. As a result of this inter-sectoral technology transfer, concepts have been derived, smaller in size than typical O&G concepts, and in which the design and manufacturing characteristics of this industry are repeated, to a greater or lesser extent.

When it comes to identifying the different currently existing technologies, it is worth mentioning the following large families:
a) Semi-submersible platform.
b) SPAR type platform.
c) TLP type platform.
d) Barge type platform.

These structures are fixed to the seabed by means of systems consisting, mainly, of anchoring lines formed by steel chain catenaries, fibre rope, etc., or by anchoring lines with tensioned or semi-tensioned systems, also called TLP (Tension Leg Platform). or "Semi-taut Systems", made up of elastomers, tendons, steel cables, etc.

The commitment to floating offshore wind power is a reality that is evident thanks to the milestone of the SPAR Hywind platform demonstration park in Scotland, installed and commissioned in autumn 2017. The development of this 30 MW experimental park with 6 MW turbines and between 95 m and 120 m deep, shows that the exploitation of wind resources can exceed a depth of 50 m, expanding the spectrum of possibilities for offshore wind installation.

However, this expansive process of floating wind power has certain limitations and uncertainties due to the different boundary conditions of each type of floating platform and specific design, since there are many variables to take into account that affect overall energy costs (LCOE, Levelised Cost Of Energy), which can basically be divided into CAPEX (Capital Expenses) and OPEX (Operating Expenses).

Within the CAPEX, in addition to financial costs and other items, construction costs are included, which vary depending on the design and complexity of the structure, as well as the base material to be used, this being mainly steel.

Regarding the OPEX, mainly the operating and exploitation costs derived from power generation and maintenance costs are included therein, together with the cost of means for accessing the park, among others. The OPEX is closely linked, not only to the investment in the maintenance of the rotating elements and equipment of the platform, but also to the work to be carried out on the structure to ensure the integrity thereof during its service life.

In this way, the design strategy seeks, on the one hand, to minimise the LCOE by acting on the different design variables in favour of a more competitive technological solution. And, on the other hand, the promoters of floating offshore wind parks encourage the search for platform typologies that allow the reduction of the OPEX, as well as reducing risks in the supply chain through the industrialisation of construction processes, and the consequent reduction of financial and economic risks.

That is why the need arises to develop structures specifically designed in concrete, which facilitate the industrialisation of construction and the optimisation of the manufacturing process, and which guarantee structural integrity during the design life of the structure under offshore ambient conditions having a reduced impact on CAPEX, and ensuring the optimum OPEX typical of traditional concrete structures in offshore environments.

Certain negative aspects shared by all current floating platform designs for the offshore wind industry must be highlighted, regardless of their structural typology, and especially in steel-based semi-submersible platforms:
a) Being designs of considerable dimensions and made of steel, they need to be manufactured in large land infrastructures specially dedicated to it, such as large shipyards. This dependence makes it difficult to manufacture, relocate and makes investment costs enormously more expensive.
b) The volatility of the availability and price of steel can make the final product more expensive at any given time, leaving the promoter, manufacturer or Contractor or EPCist without the ability to manoeuvre.
c) The manufacturing times using steel are long and able to be industrialised in a limited manner, which also makes the overall investment costs more expensive as a result of longer arrival times on the market.
d) The manufacture of this type of structures in steel results in the need for a very demanding maintenance plan of the structures, since steel has a very important corrosion problem in an offshore environment.
e) In general, all semi-submersible platforms, and especially triangular-based platforms, are dependent on the ballast and ballast transfer systems required for the automatic correction of heeling caused by unequal weight distributions and the actions of the environmental and own operational loads. This makes them very sensitive to failures in this system, as well as increasing maintenance costs.
f) SPAR and some TLP types cannot leave the port with the wind turbine already installed, which makes towing, offshore installation and commissioning costs much more expensive.
g) In general, TLP platforms have very high costs derived from the installation and maintenance of their complex anchoring system, which may make investment in this type of solution unaffordable.
h) Most of the semi-submersible structures that currently exist in the state of the art have a triangular plan, which equips them with three unique planes of symmetry, and this means that, in general, they have an unequal response pattern depending on the predominant direction of the incident waves, reducing its flexibility and safety of operation in the face of the directional variability of offshore waves.

Most of the semi-submersible platforms for offshore wind turbines referred to in the current state of the art are metallic structures. However, there is a subset of concrete-based initiatives, among which documents ES2387342(B2), ES2387232(B2), and WO2020/136288A1, from the Fundación institute de Hidráulica Ambiental de Cantabria, stand out, both related to semi-submersible platforms: consisting of a central column and a plurality of outer columns (three in the first case and four or more in the second and third cases), always attached by means of a slab in the lower area thereof, wherein both the columns and the slab are preferably made of reinforced concrete. The lower slab is reinforced by a plurality of beams connecting the base of each outer column with the base of the inner column and the base of each outer column with the base of each adjacent outer column.

The design of this intermediate bracing system requires post-tensioning of all the columns, once the climbing or slip-forming process has been completed. This post-tensioning system, in addition to making the solution more expensive, entails significant technical difficulties, derived from the height of the columns. While in the case of using the bracing system in the upper segment of the cylinders by means of a cylindrical structure, a load transmission system is required, generally a metallic structure connected to the concrete structure that derives in an element having great technical complexity and therefore an increase in the cost of the solution despite its industrialisation potential through prefabricated strategies.

The invention that is the object of this application attempts to solve all the previous drawbacks, both from the point of view of the design of the platform and the construction processes.

### Description of the invention

The invention relates to a floating concrete structure for offshore applications, which comprises a lightweight semi-submersible platform which in turn comprises:
- an inner column, comprising an upper end and a lower end in the operative position of the platform,
- a plurality of outer columns distributed around the inner column equidistant thereto, wherein the inner column or one of the outer columns is configured to support a wind turbine tower,
- a plurality of beams connecting each outer column with the inner column.

The floating structure object of the invention comprises a pontoon, the inner column and the plurality of outer columns being supported, that is, resting on the pontoon. The plurality of beams comprises first beams which extend parallel to the pontoon between the upper portion of the inner column to a point of attachment with the outer columns. Therefore, the outer columns have the same or greater height than the inner column. Beam is understood as a linear structural element.

The floating concrete structure is a structure made of concrete that is hollow and which comprises inner partitions that reinforce and compartmentalise the structure internally.

A column is understood to mean a structure having a hollow and closed cross section. The columns can comprise, for example, a quadrangular, circular or polygonal cross section. Said section can be formed by walls that are intended to shape the perimeter of the column, forming a cylinder or a prism, for example. Alternatively, the cross section can be formed by the same partitions of the floating structure crossing each other and forming a hollow and closed cross section in one portion of the structure, thus defining the mentioned column.

A pontoon is understood to be a floating structure that constitutes a resistant base having a length much greater than its thickness, flat and parallelepiped, that is, the pontoon is a flat slab. In one embodiment, the pontoon comprises a lower base and an upper base and, for example, a series of inner partitions. Therefore, the first beams would run parallel to the lower base and the upper base of the pontoon. In an embodiment, the pontoon is made of concrete.

The pontoon is configured to increase the hydrodynamic damping of vertical movements, and provide the structure with buoyancy and reduce the draught of the structure in its different phases. Likewise, from the structural point of view, the pontoons provide stiffness and resistance in the direction of the length and beam, being the support for the stabilising columns.

Therefore, the present invention tries to solve the previously mentioned drawbacks by means of a lightweight semi-submersible concrete platform which may be cross-based in an embodiment and a method of construction thereof that does not require special infrastructures.

The wind turbine tower can be located both on the inner column and on one of the outer columns, that is, eccentrically. In this case, the structure can be balanced using proper ballasting.

In a particular embodiment, the inner column has at least the tower, the nacelle, a rotor and the plurality of blades mounted.

In one embodiment, the semi-submersible platform comprises a central inner column and four stabilising outer columns attached together by means of a cross-shaped pontoon or resistant base. The columns are placed at each of the extremities of the cross.

The outer columns constitute one of the main buoyancy and stability elements of the platform in its float-off, transport and operation phases. The outer columns provide hydrostatic stability by providing inertia in the water plane and structural stiffness to the assembly.

The structure is called lightweight because the configuration object of the invention has less weight than known structures of the same type.

The arrangement of the beam system manages to increase the structural depth of the platform, reducing the overall weight of the structure, without compromising the dynamic response of the platform. In this way, with the same structural resistance of the platform, the forces supported by its structural elements are lower. The beam system connects the inner column to the outer columns. This system has been configured in such a way that it makes it possible to provide the structure with sufficient resistance to ensure a certain naval edge or prop (distance between the base and the top level of the upper base of the pontoon) and a freeboard (distance between the waterline and top of the upper base) to optimise the hydrodynamic response of the platform. The beam system provides rigidity to the whole and allows the transmission of forces caused by the operation of the wind turbine to the resistant elements and hydrodynamic reaction of the floating platform, efficiently withstanding, in terms of volume of concrete and amount of active and passive steel, the actions to which the structure is subjected, equipping it with hydrodynamic stability and structural robustness.

In an embodiment, the structure can further comprise second beams inclined with respect to the pontoon which extend between the outer column and an area of the inner column that is annexed to the pontoon and/or an area of the pontoon that is annexed to the inner column. In an embodiment, the second beams would be inclined with respect to the upper base and the lower base of the pontoon.

The structure can be made of concrete or also be hybrid, that is, it can include a number of metallic elements, specifically the beams.

In one embodiment, concrete is the main material used for the construction of the columns. Being in turn the preferred material for the beams, both in a prefabricated or in-situ format, and also for the pontoon. More preferably, the concrete is reinforced concrete.

In a particular embodiment, the semi-submersible platform further comprises an anchoring system which comprises a plurality of anchoring lines configured to be anchored to the base of each outer column or to a segment of greater resistance of each outer column. This segment is not fixed, it is selected based on the requirements. It can be the base, a middle segment or the upper deck.

Another object of the present invention is a method for manufacturing a floating concrete structure for offshore applications, which comprises the following steps:
- manufacturing a pontoon,
- manufacturing an inner column having an upper end and a lower end and a plurality of outer columns,
- distributing the plurality of outer columns around the inner column equidistant thereto, the inner column or one of the outer columns being configured to support a wind turbine tower,
- placing a plurality of beams comprising first beams which extend parallel to the pontoon between the upper portion of the inner column to a point of attachment with the outer columns,
- post-tensioning of the columns and the pontoon,
- transferring the previous structure to a dock,
- installing on the dock a tower and a wind turbine on the inner column or one of the outer columns,
- towing the structure to its location.

Therefore, the present invention provides, in turn, a construction method that can comprise the steps of: manufacturing the pontoon and the inner and outer columns being supported on the pontoon; installation, for example, of a climbing or slipping formwork configured to build an inner column and the outer columns supported on the pontoon; construction of columns simultaneously up to the upper level of the column; placement of a plurality of bracing beams which attach each outer column with the inner column; the execution of post-tensioning works; transfer of the platform to the edge of the manufacturing dock and/or the launching area.

The described invention has a notable, but not unique, application in the offshore wind industry sector as a floating platform that supports multi-megawatt wind turbines used for the harnessing of wind energy in areas the waters of which are deep enough to make the use of the invention proposed herein technically and economically feasible to the detriment of the use of other types of floating or fixed offshore structures directly piloted or fixed to the seabed.

As a person skilled in the art can appreciate, the semi-submersible platform of this embodiment has a series of advantageous features compared to the platforms of the current state of the art.

These features are, among others:
a) The use of concrete as the main construction material. The target concrete is conventional concrete, strengthening the technical-economic viability of the solution.
b) The arrangement of a column, central or eccentric, on which the equipment is mounted: tower and wind turbine, and several additional columns. In the case of an eccentric column, there is the advantage that the dimensions/capacity of the cranes required to assemble the nacelle of the wind turbine are significantly reduced, thus reducing the CAPEX and increasing health and safety conditions during wind turbine maintenance operations.
c) A concrete pontoon at the base on which the entire assembly is built, further serving to improve hydrodynamic behaviour, significantly increasing its operational performance compared to any other design.
d) The use of a beam system that serves as a stiffening element, confers structural resistance to the design, and in turn provides a global displacement or weight of the structure that is much lower than those of the platforms within its semi-submersible typology. It is therefore defined as a lightweight semi-submersible platform. Global displacement is understood as the volume of water displaced by the structure in its equilibrium position, which is equivalent to its mass.
e) The flexibility conferred by the lower pontoon in terms of the separation of the outer columns provides scalability with respect to previous proposals. The viability of this type of structure can be compromised by high-capacity turbines and their higher aerodynamic demands. The scalability of this concept, achieved through the distance between floaters, allows its adaptation without requiring a new design. In other words, for high-power turbines, an industrialisable and physically achievable structure would be possible simply by scaling the platform object of the invention.
f) The design of this platform allows the weights to be distributed in the different parts of the structure such that, for displacements very similar to those of other solutions, the hydrodynamic response is improved by reducing draughts.
g) The structure of the invention is lighter than other solutions of the same type due to the distribution of loads carried out by means of the beams that allow other elements to be lightened and to have a plan distribution of the structure that is as reduced as possible.
h) In the event that the entire structure is made of concrete, including the beams, the structure does not incorporate metallic elements that may be exposed to a corrosive environment such as the offshore environment or that allow reducing O&M requirements and taking advantage of the specific benefits of concrete.
i) This floating concrete offshore structure with a pontoon can mount on the columns (both outer and inner) a superstructure required for the correct performance of alternative missions, such as housing an electrical substation. This versatility also distinguishes it from the rest of the solutions proposed by the current state of the art.
j) The design eliminates the requirement for levels or segments with additional resistance in the columns, which would make the construction process very difficult. The beam system allows a homogeneous development of the outer columns, in addition to their function as floaters, which are harnessed from the point of view of their resistant capacity in the most efficient manner possible.
k) The platform thus formed can be industrially manufactured. Its construction process can be standardised and sequenced in a single port facility, achieving the production of a complete platform every few months.
l) The geometry of the platform allows an easy optimisation of the anchoring system to achieve the reduction of the maximum tensions in the plurality of lines shaping same. As it is a lightweight platform, this also has an impact on the stresses supported by the anchoring lines.
m) It has considerably less maintenance requirements than the rest of the designs of the state of the art, by using concrete as construction material.
n) The device is equipped with sufficient stability to allow the installation in port, afloat and with the minimum draught, of the tower and the wind turbine; such that it can be towed to the place of installation with all the equipment and systems already installed.
o) The design of the platform allows to define the weight of the platform approximately 25% lighter compared to some of the known semi-submersible type platforms. This concept allows manufacturing, launching and transportation in a greater number of ports, less investment in the manufacturing and installation esplanade and ports, facilitating movements on the esplanade or construction site, which ensures manufacturing times by reducing the risk of floating.

### Brief description of the drawings

To complement the description that is being made and in order to help make the features of the invention more readily understandable, a set of drawings is attached as an integral part of said description wherein, for illustrative and non-limiting purposes, the following has been represented:
Figure 1 shows a perspective view of a first embodiment of the floating concrete structure.
Figure 2 shows a plan view of the embodiment corresponding to figure 1.
Figure 3 shows a lateral cross section of the embodiment corresponding to figure 1.
Figure 4 shows a plan view of a second embodiment of the floating concrete structure.
Figure 5 shows a lateral cross section of the embodiment corresponding to figure 4.

### Embodiments of the invention

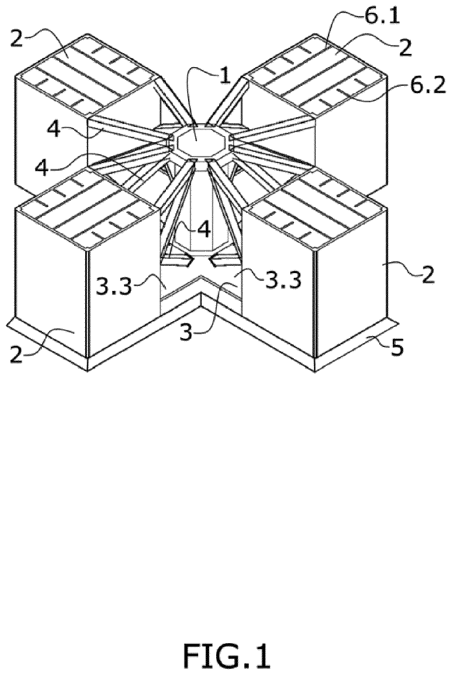

Figures 1 to 3 show an embodiment of a floating concrete structure for offshore applications, which comprises a semi-submersible platform which in turn comprises:
- an inner column (1) configured to support a wind turbine tower,
- a plurality of outer columns (2) distributed around the inner column (1) equidistant thereto (1),
- a plurality of beams (4) connecting each outer column (2) with the inner column (1).

The floating structure comprises a pontoon (3), the inner column (1) and the plurality of outer columns (2) being located on the pontoon (3).

The pontoon (3) comprises a lower base (3.1) and an upper base (3.2). The inner column (1) and the plurality of outer columns (2) being located on the lower base (3.1) of the pontoon (3).

In turn, it also comprises a plurality of beams (4) comprising:
- first beams (4.1) which extend parallel to the pontoon (3) between the upper end of the inner column (1) to a point of attachment with the outer columns (2),
- second beams (4.2) inclined with respect to the pontoon (3) which extend between the outer column (2) and an area of the inner column (1) that is annexed to the pontoon (3) and/or an area of the pontoon (3) that is annexed to the inner column (1),
- third beams (4.3) which extend between the point of attachment with the inner column (1) of the first beam (4.1) and a point of attachment with the mid-height portion of each outer column (2).

More specifically, the second beams (4.2) extend between the point of attachment of the third beam (4.3) with each outer column (2) and an area of the pontoon (3) that is annexed to the inner column (1).

More specifically, each outer column (2) comprises two first beams (4.1), two second beams (4.2) and two third beams (4.3) distributed symmetrically in each outer column (2) with respect to a plane of symmetry.

The beam system (4) can be built in concrete and/or steel. In the case of the combination of both, they are made to work together against cyclical traction-compression forces generated by dynamic actions.

The outer columns (2) can include liquid or mobile (water) and/or solid or fixed ballast inside with the aim of optimising hydrostatic and hydrodynamic behaviour, while the inner column (1) houses the systems required for the management of said mobile ballast.

In the embodiment shown, the width of each branch of the pontoon (3) is equal to the width of each outer column (2). The width of each branch of the pontoon (3) allows the hydrodynamic response of the platform as a whole to be adjusted and is a unique feature of the platform, since it gives it flexibility to be adapted to the different meteorological and oceanic calculation conditions. It facilitates transmission of forces from the inner column (1) to the pontoon (3), allows the draught to be reduced, limits the need for widenings or adjacent plates (5) or heave plates. Advantageously, it allows its hydrodynamic response across the width of the pontoon (3) to be adjusted.

More specifically, each outer column (2) of figures 1 to 3 comprises a quadrangular cross section.

Thus, in the embodiment shown, each of the symmetrical beams (4) extends up to the vicinity of a vertex of the quadrangular structure of the outer columns (2). Therefore, the outer columns (2) are parallelepipeds. The advantage of this configuration is that the beams (4) rest on respective walls of the outer column (2), achieving a robust distribution of loads of the beams (4), that is, of the loads transmitted by the tower and the wind turbine, to the outer columns (2).

In the embodiment shown, the structure comprises four outer columns (2) such that the lower pontoon (3) comprises a cross-shaped structure with four branches.

The cross-shaped arrangement of the outer columns (2) allows a perfect distribution of weights and loads to be carried out wherein the inner column (1) and the system of beams (4) and posts are intended to absorb the weight of the tower and wind turbine, as well as the same thrust of the turbine operation.

The cross-shaped arrangement equips the platform with multiple planes of symmetry that allow the design, in relation to the most common triangular plan designs, to offer a more predictable behaviour at sea regardless of the predominant direction or sector of incidence of environmental forces.

In turn, the symmetrical configuration in the main planes of the structure facilitates its construction and the design of the movement operations of the platform in the manufacturing and transfer area to start the transport. This feature also makes float operations simpler.

The structure object of the invention further comprises an anchoring system comprising a plurality of lines configured to be anchored to the segment with the greatest resistance, such as the base of each outer column (2) or the upper cover of the outer column (2) or an intermediate segment that optimises the structural and hydrodynamic response of the platform.

The inner column (1) of figures 1 to 3 has at least one tower, a nacelle, a rotor and a plurality of blades mounted therein. The inner column (1) has a hexagonal cross section.

In an embodiment, the walls of the outer columns (2) are internally stiffened by means of ribs (6.2) or partitions (6.1) in the shape of a grid, which allows the thickness of the outer walls to be efficiently reduced.

In an embodiment, the distance between each outer column (2) and the inner column (1) is approximately ¾ the base of the outer column (2).

The separation achieved between the outer columns (2), located at the ends of the cross, equips the system with stability in any operating situation throughout the service life of the structure. This separation is determined by the inertia in the floating plane and thereby its restoring or righting moment. This separation is variable and confers flexibility to the platform to be adapted to the requirements of a specific turbine.

In another embodiment, the thickness of the pontoon (3) between the lower base (3.1) and the upper base (3.2) is approximately 10% of the height of each outer column (2).

Preferably, the semi-submersible platform further comprises an extension of a lower adjacent plate (5) which can protrude from the pontoon (3) on which the inner (1) and outer (2) columns are fixed by way of a heave plate, which suitably configured can be used to optimise the hydrodynamic response of the structure. Preferably, that lower adjacent plate (5) is made of reinforced concrete.

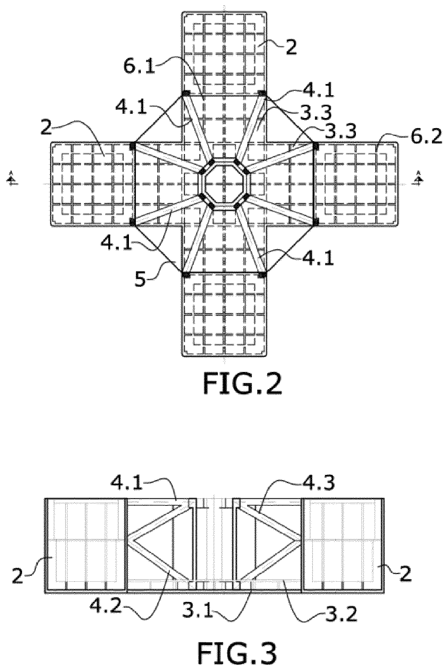

In the embodiment of figure 1, the adjacent plate (5) protrudes horizontally from the perimeter of the lower segment of the platform, being therefore projected from the outer columns (2) and the pontoon (3). Figure 2 shows another embodiment of the adjacent plate (5) which also consists of a projection of the pontoon (3) in its intersection segment which extends in a triangular shape between the different inner walls and partitions of the branches (3.3) of the pontoon (3).

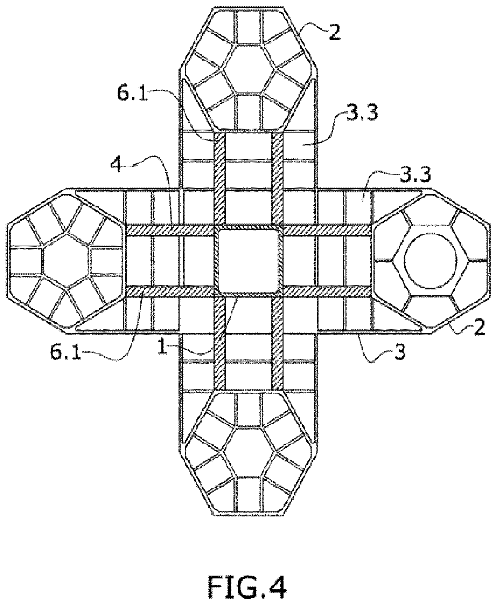

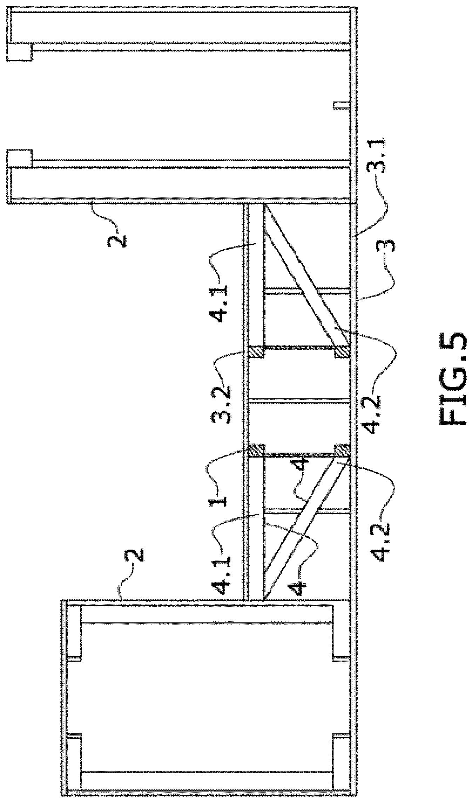

In figures 4 and 5, the inner column (1) and the plurality of beams (4) are located between the lower base (3.1) and the upper base (3.2) of the pontoon (3) unlike figures 1 to 3 wherein the plurality of beams (4) are located outside the pontoon (3) and the inner column (1), and the plurality of outer columns (2) also extend over the upper base (3.2) of the pontoon (3).

In the embodiment shown in figures 4 and 5, the inner column (1) is limited in height by the upper slab (3.1) of the pontoon (3). The inner column (1) is formed by partitions (6.1) of the pontoon (3) that cross each other. In the embodiment shown, the crossing of the partitions (6.1) forms an inner column (1) with a square cross section. In the embodiment shown, the inner column (1) has a square cross section.

The embodiment of figures 4 and 5 also comprises second beams (4.2) which in this case extend between the point of attachment of the first beam (4.1) with the outer column (2) to an area of the inner column (1) in the area thereof that is annexed to the lower base (3.1) of the pontoon (3).

In an embodiment, the first beams (4.1) can be a rib (6.2) of the upper base (3.2) of the pontoon (3).

## Claims

1. Floating concrete structure for offshore wind applications, comprising a semi-submersible platform which in turn comprises:
- an inner column (1) comprising an upper end and a lower end,
- a plurality of outer columns (2) distributed around the inner column (1) equidistant thereto (1), wherein the inner column (1) or one of the outer columns (2) is configured to support a wind turbine tower,
- a plurality of beams (4) connecting each outer column (2) with the inner column (1),
the floating structure being **characterised in that** it comprises a pontoon (3), the inner column (1) and the plurality of outer columns (2) being supported on the pontoon (3) and **in that** the plurality of beams (4) comprises first beams (4.1) which extend parallel to the pontoon (3) between the upper end of the inner column (1) to a point of attachment with the outer columns (2).

2. Floating concrete structure for offshore wind applications, according to claim 1, **characterised in that** it comprises second beams (4.2) inclined with respect to the pontoon (3) which extend between the outer column (2) and an area of the inner column (1) that is annexed to the pontoon (3) and/or an area of the pontoon (3) that is annexed to the inner column (1).

3. Floating concrete structure for offshore wind applications, according to claim 2, **characterised in that** each outer column (2) comprises two first beams (4.1) and two second beams (4.2) distributed symmetrically in each outer column (2) with respect to a plane of symmetry thereof (2).

4. Floating concrete structure for offshore wind applications, according to any one of the preceding claims, **characterised in that** the pontoon (3) comprises branches (3.3) which extend from the inner column (1) and the width of each branch (3.3) of the pontoon (3) is equal to the width of each outer column (2).

5. Floating concrete structure for offshore wind applications, according to any one of the preceding claims, **characterised in that** each outer column (2) comprises a quadrangular, circular or polygonal cross section.

6. Floating concrete structure for offshore wind applications, according to claim 5, **characterised in that** each of the beams (4) extends up to the proximity of a vertex of the cross section of the outer column (2).

7. Floating concrete structure for offshore wind applications, according to any one of the preceding claims, **characterised in that** it comprises four outer columns (2).

8. Floating concrete structure for offshore wind applications, according to claim 7, **characterised in that** the pontoon (3) comprises a cross shape with four branches (3.3).

9. Floating concrete structure for offshore wind applications, according to any one of the preceding claims, **characterised in that** the distance between the perimeter of each outer column (2) and the perimeter of the inner column (1) is approximately ¾ of the diagonals or the radius of the base of the outer column (2).

10. Floating concrete structure for offshore wind applications, according to any one of the preceding claims, **characterised in that** the pontoon (3) comprises a lower base (3.1) and an upper base (3.2).

11. Floating concrete structure for offshore wind applications, according to claim 10, **characterised in that** the inner column (1) and the plurality of outer columns (2) are located on the lower base (3.1) of the pontoon (3).

12. Floating concrete structure for offshore wind applications, according to any one of claims 2 to 11, **characterised in that** it comprises third beams (4.3) which extend between the point of attachment with the inner column (1) of the first beam (4.1) and a point of attachment with the mid-height portion of each outer column (4.2) and **in that** the second beams (4.2) extend between the point of attachment of the third beam (4.3) with each outer column (2) and an area of the pontoon (3) that is annexed to the inner column (1).

13. Floating concrete structure for offshore wind applications, according to claim 10, **characterised in that** the inner column (1) and the plurality of beams (4) are located between the lower base (3.1) and the upper base (3.2) of the pontoon (3).

14. Floating concrete structure for offshore wind applications, according to claim 13, **characterised in that** the second beams (4.2) extend between the point of attachment of the first beam (4.1) with the outer column (2) to an area of the inner column (1) in the area thereof that is annexed to the lower base (3.1) of the pontoon (3).

15. Method for manufacturing a floating concrete structure for offshore wind applications, **characterised in that** it comprises the following steps:
- manufacturing a pontoon (3),
- manufacturing an inner column (1) having an upper end and a lower end and a plurality of outer columns (2),
- distributing the plurality of outer columns (2) around the inner column (1) equidistant thereto, the inner column (1) or one of the outer columns (2) being configured to support a wind turbine tower,
- placing a plurality of beams (4) comprising first beams (4.1) which extend parallel to the pontoon (3) between the upper portion of the inner column (1) up to a point of attachment with the outer columns (2),
- post-tensioning of the columns (1, 2) and of the pontoon (3),
- transferring the previous structure to a dock,
- installing on the dock a tower and a wind turbine on the inner column (1) or one of the outer columns (2),
- towing the structure to its location.
